# EUROPÄISCHE PATENTANMELDUNG

(11) **EP 1 229 283 A1**
(43) Veröffentlichungstag der Anmeldung: **07.08.2002**
(21) Anmeldenummer: 01129331.3
(22) Anmeldetag: 14.12.2001
(51) Int. Cl.: F16L 7/02, F16L 5/08

(54) **Durchführungseinrichtung für Mauerwerke**

(30) Priorität: 06.02.2001 DE 10105155
(71) Anmelder: DSI ROHRLEITUNGSBAU-ZUBEHÖR GmbH, D-72147 Nehren (DE)
(72) Erfinder: Lutz, Uli, 73061 Ebersbach (DE)
(74) Vertreter: Dreiss, Fuhlendorf, Steimle & Becker

(57) **Zusammenfassung**

Eine Durchführungseinrichtung (10) für das feuchtigkeits- und/oder druckdichte Durchführen von Installationselementen (12), wie Rohre, Kabel, Kanäle oder dgl. durch einen äußeren Körper (14), wie Schutzrohr, Kernbohrung, Stützrohr/Mauerhülse oder dgl., besitzt eine Gliederkettendichtung (13) zwischen dem äußeren Körper (14) und einem inneren Körper (15), der durch einen Stopfen (15) aus elastischem Material gebildet ist, der mit zwei oder mehr durchgehenden axialen Ausnehmungen (21) zum getrennten Aufnehmen von Installationselementen (12) versehen ist. Eine derartige Durchführungseinrichtung (10) ist im Vorgriff auf zwei oder mehr jeweils feuchtigskeits- und/oder druckdicht einbringbare Installationselemente (12) ausgerichtet, wobei auch eine Abdichtung der Installationselemente (12) untereinander und nicht nur zum Innenumfang der Durchführung hin in einfacher Weise möglich ist.

## Beschreibung

Die vorliegende Erfindung bezieht sich auf eine Durchführungseinrichtung für das feuchtigkeits- und/oder druckdichte Durchführen von Installationselementen, wie Rohre, Kabel, Kanäle oder dgl. durch einen äußeren Körper, wie Schutzrohr, Kernbohrung, Stützrohr/Mauerhülse oder dgl., nach dem Oberbegriff des Anspruchs 1.

Bekannt sind derartige Durchführungseinrichtungen, die ausschließlich aus einer Ringraumabdichtvorrichtung in Form einer Gliederkettendichtung bestehen, wie sie bspw. aus der DE 196 01 288 C2 bekannt ist. Eine derartige Gliederkettendichtung ist als in den äußeren Körper nachträglich eingebrachte Durchführung an den Durchmesser des betreffenden Installationselementes, das den inneren Körper bildet, angepasst. Ein Aufnehmen von mehreren parallelen Installationselementen in einer Durchführungseinrichtung scheitert bei den bekannten Gliederkettendichtungen daran, dass eine Abdichtung zwischen zwei benachbarten Installationselementen und dem Innenumfang der Gliederkettendichtung praktischerseits nicht möglich ist.
Aufgabe der vorliegenden Erfindung ist es, eine Durchführungseinrichtung der eingangs genannten Art zu schaffen, die im Vorgriff auf zwei oder mehr jeweils feuchtigkeits- und/oder druckdicht einbringbare Installationselemente ausgerichtet ist, wobei auch eine Abdichtung der Installationselemente untereinander und nicht nur zum Innenumfang der Durchführung hin in einfacher Weise möglich ist.

Zur Lösung dieser Aufgabe sind bei einer Durchführungseinrichtung der genannten Art die im Anspruch 1 angegebenen Merkmale vorgesehen.

Mit den erfindungsgemäßen Maßnahmen ist erreicht, dass einerseits die Gliederkettendichtung wie üblich in dem betreffenden Durchgang einsetzbar ist und dass andererseits gleichzeitig jedes einzelne Installationselement innerhalb des in der Gliederkettendichtung vorgesehenen inneren Körpers in einer getrennten, eine eigene Subdurchführung bildenden axialen Ausnehmung in entsprechender auszugestaltender Weise aufgenommen ist. Die Durchführungseinrichtung dient somit zu einer einfachen feuchtigkeits- und/oder druckdicht auszugestaltenden Aufnahme von zwei oder mehr Installationselementen.

In bevorzugter Weise sind die Merkmale nach Anspruch 2 vorgesehen, so dass im Vorgriff eine Mehrfachnutzung einplanbar ist, die in zeitlich unterschiedlichen Etappen ausgebaut werden kann. Es ist nicht nur möglich, die Durchführungseinrichtung bei dem zunächst vorgesehenen Stopfen mit weiteren Installationselementen zu versehen bzw. zu bestücken, sondern auch unter Auswechseln eines Stopfens innerhalb der Gliederkettendichtung weniger oder mehr Installationselemente nachträglich unterzubringen.

Sind dabei die Merkmale nach Anspruch 3 vorgesehen, ergibt sich eine relativ große Dichtfläche innerhalb des Stopfens. Sind ggf. außerdem die Merkmale nach Anspruch 4 vorgesehen, ist ein einfaches Ausschneiden der axialen Ausnehmungen möglich.

Mit den Merkmalen nach Anspruch 5 ist die nachträgliche Belegung mit einem weiteren Installationselement dadurch vereinfacht, dass der zunächst die axiale Ausnehmung noch abdichtende stiftartige Kern in einfacher Weise durch das Installationselement ersetzt werden kann. Dabei ist es zweckmäßig, gemäß den Merkmalen nach Anspruch 6 den stiftartigen Kern während der Handhabung des Stopfens unverlierbar zu halten.

Weitere vorteilhafte Anordnungen und Ausgestaltungen der axialen Ausnehmung ergeben sich aus den Merkmalen eines oder mehrerer der Ansprüche 7 bis 10. Eine Ausgestaltung der Gliederkettendichtung ergibt sich aus den Merkmalen nach Anspruch 11.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in Vorderansicht eine Durchführungseinrichtung gemäß einem bevorzugten Ausführungsbeispiel vorliegender Erfindung und
- Figur 2: in Vorderansicht einen bei der Durchführungseinrichtung nach Figur 1 verwendeten Stopfen gemäß einer Variante.

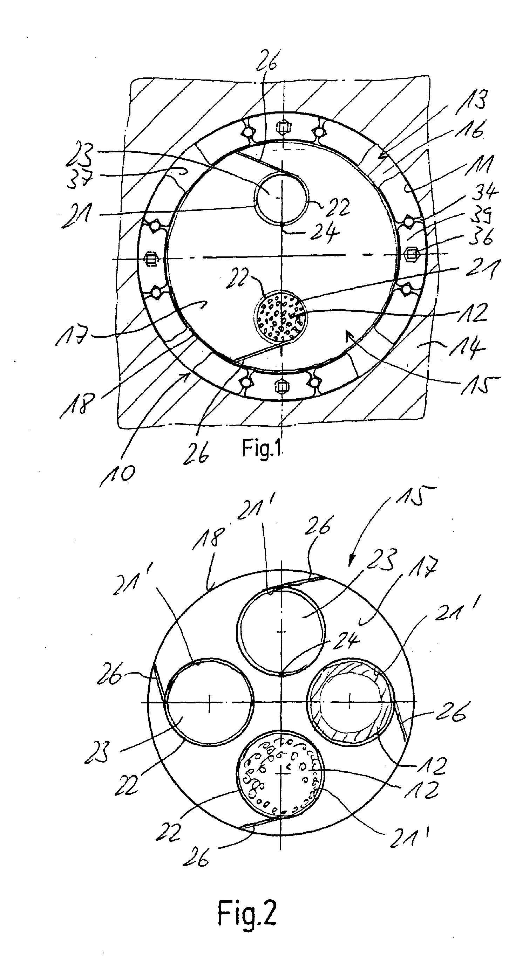

Die in Figur 1 dargestellte Durchführungseinrichtung 10 dient zum Einsetzen in einen Durchgang 11 und zum Aufnehmen von Installationselementen 12, von denen eines in Form eines Kabels eingezeichnet ist. Der Durchgang 11 kann in verschiedenster Weise ausgebildet und durch verschiedenste Bauteile bzw. Körper gebildet sein, bspw. durch eine Kernbohrung oder eine nicht kreisförmige Aussparung in einem Mauerwerk oder wie er in einem Schutzrohr gebildet ist oder dgl.. Als Installationselemente 12 kommen bspw. Leitungsrohre, Medienschutzrohre, Kabel, Kanäle oder dgl. in Frage. Die Durchführungseinrichtung 10 ist zum Aufnehmen von zwei oder mehr derartiger Installationselemente 12 geeignet. Die Durchführungseinrichtung 10 besteht im Wesentlichen aus einer Gliederkettendichtung 13 und einem in diese im Wesentlichen spielfrei einbringbaren bzw. einsteckbaren Dichtstopfen 15, der als innerer Körper zusammen mit einem den Durchgang 11 beinhaltenden äußeren Körper einen Ringraum 16 bildet. Der der Durchführung von Installationselementen 12 dienende Dichtstopfen 15 besitzt eine bestimmte Dicke bzw. axiale Ausdehnung, die, wie im Folgenden noch beschrieben werden wird, von der Einsatzart abhängig, bspw. etwa gleich der axialen Länge der Gliederkettendichtung 13 ist. Wenn auch der Umfang des Dichtstopfens 15 kreisrund dargestellt ist, versteht es sich, dass der Außenumfang des Dichtstopfens 15 auch nicht kreisförmig ausgestaltet werden kann, je nach dem, wie sich der Innenumfang bzw. der Querschnitt des Durchganges 11 darstellt. Bevorzugt sind jedoch keine rein eckigen Formen vorgesehen, sondern nur solche, die im wesentlichen an allen Bereichen gerade und runde oder nur runde Begrenzungen aufweisen.

Der Dichtstopfen 15, der aus einem hinsichtlich Feuchtigkeit und/oder Druck dichtfähigem elastischem Material besteht, besitzt zwei (Figur 1) oder mehr (Figur 2) axiale Ausnehmungen 21 bzw. 21' unterschiedlicher Anordnung und ggf. unterschiedlichen Querschnitts über die Stirnfläche 17 des Dichtstopfens 15 hinweg und ggf. unterschiedlicher Ausgestaltung. Gemäß den Figuren 1 und 2 sind die axialen Ausnehmungen 21 bzw. 21' kreisförmig ausgestaltet, um im Querschnitt kreisförmige Installationselemente 12 aufnehmen zu können. Es versteht sich, dass auch hier unterschiedliche Innenumfangsformen der axialen Ausnehmungen 21 bzw. 21' vorgesehen sein können, wie dies zur Außenumfangsform des Dichtstopfens 15 beschrieben ist.

Der Dichtstopfen 15 besitzt gemäß den Varianten der Figuren 1 und 2 zwei bzw. vier durchmessergleiche axiale Ausnehmungen 21 bzw. 21', die nach Figur 1 oberhalb und unterhalb der horizontalen Mittellinie und in der vertikalen Mittelebene liegend angeordnet sind, und die gemäß Figur 2 über die Stirnfläche 17 gleichmäßig verteilt angeordnet jeweils paarweise auf der horizontalen bzw. vertikalen Mittelebene liegend vorgesehen sind. Die axialen Ausnehmungen 21 und 21' sind beim Ausführungsbeispiel dadurch gebildet, dass der aus Vollmaterial hergestellte Dichtstopfen 15 mit einem hier kreisförmigen ersten Schnitt 22 versehen ist. Durch diesen nicht vollkommen geschlossenen kreisförmigen Schnitt 22 verbleibt in der axialen Ausnehmung 21 bzw. 21' zunächst ein stiftartiger Kern 23, der über einen Sollbruchsteg 24 noch mit dem Dichtstopfen 15 verbunden ist. Auf diese Weise kann dann, wenn die betreffende axiale Ausnehmung 21 mit einem Installationselement 12 im Wesentlichen spielfrei belegt werden soll, der Kern 23 durch Abbrechen des Sollbruchstegs 24 in einfacher Weise aus dem Dichtstopfen 15 getrennt werden. Ein im Dichtstopfen 15 verbleibender stiftartiger Kern 23 bewirkt wie ein durchgeführtes Installationselement 12 eine feuchtigkeits- und/oder druckdichte Abdichtung dieser betreffenden axialen Ausnehmung 21.

Der die axiale Ausnehmung 21 schlussendlich bildende erste Schnitt 22 ist mit einem zweiten geradlinig verlaufenden Schnitt 26 verbunden, der an einer Stelle des Außenumfangs 18 des Dichtstopfens 15 mündet. Dieser zweite Schnitt 26 verläuft einerseits tangential zum ersten hier kreisrunden Schnitt 22 und andererseits in einem vorzugsweisen spitzen Winkel zur horizontalen bzw. vertikalen Mittelebene und damit auch zu einer am betreffenden Außenumfang 18 des Dichtstopfens 15 gedachten Tangente. Über diesen zweiten Schnitt 26 im Dichtstopfen 15 ist es möglich, auch nachträglich Zugang zu der betreffenden vom Kern 23 befreiten axialen Ausnehmung 21 bzw. 21' zu erhalten.

Die Herstellung der Schnitte 22 und 26 kann in einer für das beim Dichtstopfen 15 verwendete Kunststoffmaterial geeigneten Weise, bspw. in Wasserstrahltechnik erfolgen. Es versteht sich, dass die Anordnung der axialen Ausnehmungen 21, 21' auch derart sein kann, dass um eine zentrische Ausnehmung gleichmäßig verteilt mehrere weitere Ausnehmungen vorgesehen sind.

Wie erwähnt, dient die Gliederkettendichtung 13 dazu, dass sie feuchtigkeits- und/oder druckdicht die Installationselemente 12 aufnimmt und dass sie selbst feuchtigkeits- und/oder druckdicht in den betreffenden Durchgang 11 eingesetzt werden kann. Eine derartige Gliederkettendichtung 13 ist in der DE 196 01 288 C2 beschrieben. Die Gliederkettendichtung 13 ist in einem gewissen Toleranzbereich an die Größe des äußeren Ringraums 16 zwischen Durchgang 11 im äußeren Körper 14 und dem Dichtstopfen 15 als inneren Körper anpassbar. Die Gliederkettendichtung 13 ist nicht nur entsprechend der Größe des Ringspaltes des Ringraums 16 sondern auch entsprechend dem Außendurchmesser des Durchganges 11 ausgestaltet. Demgegenüber ist der Außenumfang des Dichtstopfens 15 an den Innenumfang der Gliederkettendichtung 13 oder umgekehrt angepasst. Aufgrund der einzelnen aneinandergesetzten Dichtglieder, deren Anzahl dem Einsatzzweck angepasst sein kann, sind derartige Gliederkettendichtungen 13 auch in nicht kreisförmige Ringräume 16 zur feuchtigkeits- und/oder druckdichten Abdichtung einsetzbar.

Die in Figur 1 schematisch dargestellte Gliederkettendichtung 13 besitzt über den Umfang des Ringraumes 16 verlaufende Ringsegmente 34, die in gleicher Weise aufgebaut und deren Geometrie gleich ist. Je nach Umfang des Ringraums 16 können zwei oder mehr, vorzugsweise eine Vielzahl von Ringsegmenten 34 vorgesehen sein. Benachbarte Ringsegmente 34 sind durch Spannmittel 36 miteinander zu einer umlaufenden Kette verbunden. Längs beider Stirnflächen 37 der Ringsegmente 34 sind Druckelemente 39 vorgesehen, durch die mit Hilfe der Spannmittel 36 die Ringsegmente 34 in axialer Richtung zusammengedrückt werden. Dadurch weichen die Ringsegmente 34 in radialer Richtung sowohl zum inneren Körper, dem Dichtstopfen 15 als auch zum äußeren Körper, dem Mauerwerk 14 elastisch aus, so dass eine Abdichtung des Ringraumes 16 gegenüber den axial benachbarten Räumen erfolgt. Außerdem wird durch den auf den Dichtstopfen 15 übertragenen radialen Druck der Dichtstopfen 15 selbst um das betreffende Installationselement 12 bzw. den stehengebliebenen Kern 23 und im Bereich des Zugangsschnittes 26 abgedichtet. Auf diese Weise dient die Durchführungseinrichtung 10 sowohl zum Abdichten des Ringraums 16 als auch zum gleichzeitigen Abdichten mehrerer bzw. eines Bündels von Installationselementen 12 innerhalb des Dichtstopfens 15.

Die axiale Länge des Dichtstopfens 15 bzw. dessen Einbautiefe hängt von der Breite der Gliederkettendichtung 13 ab und deren Dickenabmessung wiederum davon, bis zu welcher Größenordnung die Durchführungseinrichtung 10 druckdicht sein muss.

Gemäß einem weiteren nicht dargestellten Ausführungsbeispiel ist der Dichtstopfen 15 nicht mit Zugangsschlitzen versehen, sondern teilbar bzw. geteilt und mittels geeigneter Mittel wieder zusammenfügbar. Das Teilen des Dichtstopfens in zwei oder mehr Teile erfolgt mittig durch die axialen Ausnehmungen 21, 21' hindurch, damit eine bspw. zweifach belegte Durchführung nachträglich mit einem oder mehreren weiteren Installationselementen belegt und alle dann vorgesehenen Installationselemente von einem anderen entsprechend ausgestalteten Dichtstopfen 15 umfasst werden können. Entsprechendes gilt naturgemäß auch bei einer Reduzierung der Installationselemente innerhalb der Durchführungseinrichtung 10.

## Patentansprüche

1. Durchführungseinrichtung (10) für das feuchtigkeitsund/oder druckdichte Durchführen von Installationselementen (12), wie Rohre, Kabel, Kanäle oder dgl. durch einen äußeren Körper (14), wie Schutzrohr, Kernbohrung, Stützrohr/Mauerhülse oder dgl., mit einer Gliederkettendichtung (13) zwischen dem äußeren Körper (14) und einem inneren Körper (15), **dadurch gekennzeichnet, dass** der den bspw. ringartigen Raum (16) begrenzende innere Körper durch einen Stopfen (15) aus elastischem Material gebildet ist, der mit zwei oder mehr durchgehenden axialen Ausnehmungen (21) zum getrennten Aufnehmen von Installationselementen (12) versehen ist.

2. Durchführungseinrichtung nach Anspruch 1, **dadurch gekennzeichnet, dass** zwischen den axialen Ausnehmungen (21) und dem Außenumfang (18) des Stopfens (15) ein Schlitz (26) vorgesehen ist.

3. Durchführungseinrichtung nach Anspruch 2, **dadurch gekennzeichnet, dass** der Schlitz (26) spitzwinklig zu einer Tangentialen am Außenumfang des Stopfens (15) in der Austrittslinie des Schlitzes (26) verläuft.

4. Durchführungseinrichtung nach Anspruch 2 oder 3, **dadurch gekennzeichnet, dass** der Schlitz (26) tangential zur Ausnehmung (21) verläuft.

5. Durchführungseinrichtung nach mindestens einem der vorhergehenden Ansprüche, **dadurch gekennzeichnet, dass** die Ausnehmung (21) durch Ausschneiden eines stiftartigen Kerns (23) gebildet ist.

6. Durchführungseinrichtung nach Anspruch 5, **dadurch gekennzeichnet, dass** der stiftartige Kern (23) bis auf einen Sollbruchsteg (24) ausgeschnitten ist.

7. Durchführungseinrichtung nach mindestens einem der Ansprüche 1 bis 6, **dadurch gekennzeichnet, dass** die axialen Ausnehmungen (21) über die Stirnfläche (17) des Stopfens (15) gleichmäßig verteilt sind.

8. Durchführungseinrichtung nach mindestens einem der Ansprüche 1 bis 6, **dadurch gekennzeichnet, dass** um eine mittige axiale Ausnehmung mehrere weitere axiale Ausnehmungen (21) verteilt angeordnet sind.

9. Durchführungseinrichtung nach mindestens einem der vorhergehenden Ansprüche, **dadurch gekennzeichnet, dass** die axialen Ausnehmungen (21) gleiche oder unterschiedliche Innenformen aufweisen.

10. Durchführungseinrichtung nach mindestens einem der vorhergehenden Ansrpüche, **dadurch gekennzeichnet, dass** die axialen Ausnehmungen (21) gleiche oder unterschiedliche Querschnittsgröße aufweisen.

11. Durchführungseinrichtung nach mindestens einem der vorhergehenden Ansprüche, **dadurch gekennzeichnet, dass** sie mit einem oder mehreren, ein- oder mehrteiligen, über den Umfang eines bspw. ringförmigen Raumes (16) verlaufenden und diesen umfangsseitig ausfüllenden Dichtelementen (34), mit an den axial äußeren Stirnflächen des Dichtelementes (34) oder der axial in Bezug auf den ringförmigen Raum nebeneinanderliegenden Dichtelementen (34) verlaufenden Druckelementen (39) und mit mit den Druckelementen (39) zusammenwirkenden und diese und das oder die Dichtelemente (34) axial durchdringenden Spannmitteln (36) zum axialen Zusammendrücken und zum radialen Aufweiten des oder der Dichtelemente (34) versehen ist.
